# EUROPEAN PATENT APPLICATION

(11) **EP 4 455 673 A1**
(43) Date of publication of application: **30.10.2024**
(21) Application number: 22910557.2
(22) Date of filing: 21.10.2022
(51) Int. Cl.: G01N 35/00

(54) **AUTOMATIC ANALYSIS DEVICE**

(30) Priority: 24.12.2021 JP 2021210654
(71) Applicant: HITACHI HIGH-TECH CORPORATION, Tokyo 105-6409 (JP)
(72) Inventor: AKABANE Kohei, Tokyo 105-6409 (JP); TAKAYAMA Hiroyuki, Tokyo 105-6409 (JP); NONAKA Kohei, Tokyo 105-6409 (JP)
(74) Representative: MERH-IP Matias Erny Reichl Hoffmann Patentanwälte PartG mbB
(86) International application number: PCT/JP2022/039275
(87) International publication number: WO 2023/119835

(57) **Abstract**

Problem

It is to provide an automatic analyzer capable of reducing the maintenance frequency by urging the sensor replacement or the water supply tank cleaning at the best timing.

Means for Solution

An automatic analyzer includes a water supply tank 53 that temporarily stores the water supplied outside of the analyzer 100 and consumed in each mechanism of the same, an optical sensor 52 including a light source 302 and a light receiving unit 301 for receiving the light irradiated from the light source 302, for detecting the amount of the water within the water supply tank 53, and a controller 24 that controls the operation of each mechanism within the automatic analyzer 100, in which the water supply tank 53 is arranged between the light source 302 and the light receiving unit 301, and the controller 24 determines whether the optical sensor 52 is abnormal or whether there is the contamination within the water supply tank 53, according to the output voltage supplied from the light receiving unit 301 when the water of the water supply tank 53 is temporarily reduced.

## Description

### Technical Field

The present invention relates to an automatic analyzer.

### Background Art

As an example of an automatic analyzer and a water storage amount control method capable of preventing occurrence of overflow caused by a malfunction in an on-off valve that controls water supply to a tank, PTL 1 describes arranging first and second on-off valves in series to control the opening and closing of a supply pipeline through which water is supplied from a water generating device to a water storage tank, detecting a water level in the water storage tank based on detection signals from upper limit water level detection means for detecting that a water level in the water storage tank is higher than or equal to an upper limit water level position in a water level fluctuation range during normal time and lower limit water level detection means for detecting that the water level in the water storage tank is higher than or equal to a lower limit water level position in a water level fluctuation range, and when the water level in the water storage tank is not lower than or equal to the lower limit water level position even after a predetermined water level drop estimated time elapses from when the water level in the water storage tank is higher than or equal to the upper limit water level position, one of the first and second on-off valves is determined to be abnormal, thus the other one of the first and second on-off valves is closed to stop water supply to the water storage tank.

### Citation List

### Patent Literature

PTL 1: JP2014-10097A

### Summary of Invention

### Technical Problem

In an automatic analyzer, for example, in a biochemical automatic analyzer, component analysis of a biological sample such as serum or urine is executed. In the biochemical automatic analyzer, in general, a sample and a reagent are dispensed into a reaction vessel using a dispensing probe to cause a reaction to occur, and a change in color tone or turbidity in the reaction liquid is optically measured by a photometry unit such as a spectral photometer.

Therefore, contamination or the like in the probe affects dispensing accuracy, and thus also affects reliability of the automatic analyzer as a result. Accordingly, after dispensing the sample or the like, the sample or the like attached to an outer surface or an inner surface of the probe is cleaned by a cleaning solution in a cleaning tank.

In the biochemical automatic analyzer, water is used for dispensing or cleaning. Water is generated from a manufacturing device separated from a main body. Therefore, even when the supplied water includes bubbles, to prevent the bubbles from entering the inside of the analyzer, a water storage tank (water supply tank) having a sufficient size for the water flow to become stable is provided.

PTL 1 describes that a water level detection mechanism for detecting the water level of water stored in the water storage tank is provided, and the water level detection mechanism includes a float switch capable of moving in a vertical direction as a water level detector.

In the water supply tank where the water flow is stable, contamination or bacteria are likely to occur on the inner surface of the water supply tank. When the analyzer is used in a state where contamination or bacteria are accumulated in the water supply tank, there is a concern that contaminated water is supplied to the analyzer and affects the analysis performance. Therefore, in the product in the related art, customers are required to clean the water supply tank about once every month.

However, maintenance and regular cleaning that affect the analysis performance are burdens on the customer. An increase of objects in contact with water leads to an increase in the area of contamination accumulated portions and an increase in the area of portions to be cleaned. Therefore, it is desirable to monitor the water level from the outside of the water supply tank.

In an optical sensor that is generally used as a method of monitoring the water level from the outside of the water supply tank, a voltage is output according to a light receiving amount when light from a light source is received by a light receiving unit. Based on the voltage value, whether the water level is higher or lower than the optical axis is detected.

However, when the light intensity decreases due to deterioration of the light source or the like or when contamination is attached to the optical axis, the possibility of erroneous detection of the water level is also considered. Therefore, it is desirable to detect not only the water level but also a decrease in light intensity of the light source or contamination in the water supply tank such that the maintenance of the water supply system can be executed at a more appropriate timing.

The present invention has been made in consideration of the above-described problems, and an object thereof is to provide an automatic analyzer capable of reducing the maintenance frequency by urging the sensor replacement or the water supply tank cleaning at the best timing.

### Solution to Problem

The present invention includes a plurality of means for solving the above-described object. For example, an automatic analyzer includes: a water supply tank that temporarily stores water supplied outside of the analyzer and consumed in each mechanism of the same analyzer; an optical sensor including a light source and a light receiving unit for receiving light irradiated from the light source, for detecting amount of the water within the water supply tank; and a control unit that controls operation of each mechanism within the automatic analyzer, in which the water supply tank is arranged between the light source and the light receiving unit, and the control unit determines whether the optical sensor is abnormal or whether there is contamination within the water supply tank, according to an output voltage supplied from the light receiving unit when the water of the water supply tank is temporarily reduced.

### Advantageous Effects of Invention

According to the present invention, the maintenance frequency can be reduced by urging the sensor replacement or the water supply tank cleaning at the best timing. Objects, configurations, and effects other than those described above will be clarified by describing the following embodiment.

### Brief Description of Drawings

[Fig. 1] Fig. 1 is a view of the whole configuration of an automatic analyzer according to an embodiment.
[Fig. 2] Fig. 2 is a configuration view of a water supply unit of the automatic analyzer according to the embodiment.
[Fig. 3] Fig. 3 is a top view of a water supply tank of the automatic analyzer according to the embodiment.
[Fig. 4] Fig. 4 is a view showing the arrangement of sensors viewed from the horizontal direction in the water supply tank of the automatic analyzer according to the embodiment.
[Fig. 5] Fig. 5 is a conceptual diagram of interference between the optical sensors.
[Fig. 6] Fig. 6 shows relationship between the input voltage to the light source and the output voltage at the light receiving unit in the automatic analyzer according to the embodiment.
[Fig. 7] Fig. 7 is a flow chart showing the flow of determining whether the light intensity decreases and whether the contamination exists in the automatic analyzer according to the embodiment.

### Description of Embodiments

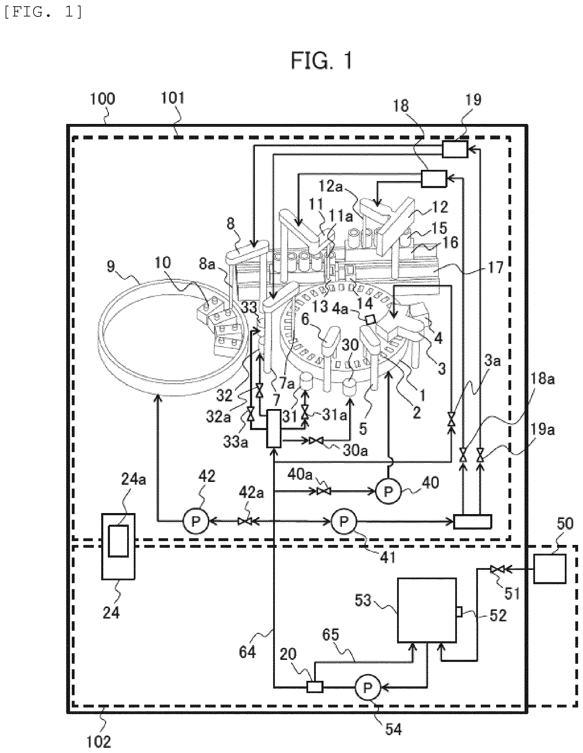

An embodiment of an automatic analyzer according to the present invention will be described using Figs. 1 to 7. In the drawings used in the present specification, the same or corresponding components are represented by the same or similar reference numerals, and the description of these components will not be repeated.

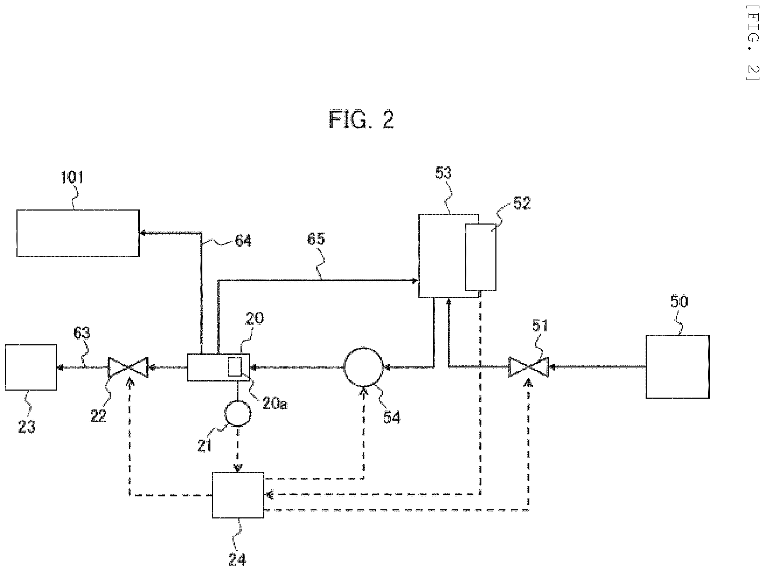

First, an example of an overall configuration of the automatic analyzer will be described using Figs. 1 and 2. Fig. 1 is a diagram schematically showing an overall configuration of an automatic analyzer 100, and Fig. 2 shows a flow path configuration for supplying water from a water supply equipment 50 to an analysis unit 101.

The automatic analyzer 100 shown in Fig. 1 is mainly classified into three regions including: an analysis unit 101 that is a configuration for mixing a sample such as blood and a reagent with each other to cause a reaction and measuring an absorbance of the reaction liquid; a part of a water supply unit 102 that is a mechanism for supplying water to each of mechanisms of the analysis unit 101; and a controller 24.

The analysis unit 101 is configured by various mechanisms that dispense samples and reagents into a plurality of reaction vessels 2, respectively, cause the sample and the reagent to react with each other, and measure the reaction liquid, and includes a reaction disk 1, a reagent disk 9, a sample conveying mechanism 17, reagent dispensing mechanisms 7 and 8, a syringe for reagent 19, sample dispensing mechanisms 11 and 12, a syringe for sample 18, a cleaning mechanism 3, a light source 4a, a spectral photometer 4, stirring mechanisms 5 and 6, and cleaning tanks 13, 14, 30, 31, 32, and 33.

In the reaction disk 1, a plurality of reaction vessels 2 for mixing a sample and a reagent with each other to cause a reaction are arranged on a circumference. In the vicinity of the reaction disk 1, the sample conveying mechanism 17 that moves a sample rack 16 on which a sample vessel 15 containing a sample such as blood is loaded is provided.

The sample dispensing mechanisms 11 and 12 capable of rotation and vertical movement are provided between the reaction disk 1 and the sample conveying mechanism 17, and include sample probes 11a and 12a, respectively. The syringe for sample 18 is connected to the sample probes 11a and 12a. Each of the sample probes 11a and 12a moves along an arc around a rotating shaft, and dispenses the sample into the reaction vessel 2 from the sample vessel 15 conveyed to a sample dispensing position by the sample conveying mechanism 17.

In an operating range of the sample dispensing mechanism 11, the cleaning tank 13 where the sample probe 11a is cleaned with cleaning water and a cleaning vessel (not shown for convenience of illustration) cleaned with special cleaning water are arranged. Likewise, in an operating range of the sample dispensing mechanism 12, the cleaning tank 14 where the sample probe 12a is cleaned with cleaning water and a cleaning vessel (not shown) cleaned with special cleaning water are arranged.

The reagent disk 9 has a structure in which a plurality of reagent bottles 10 can be loaded on a circumference. The reagent disk 9 is kept cool and is covered with a cover provided with an aspiration port (not shown) . The reagent bottle 10 is a bottle containing the reagent used for analyzing the sample.

The reagent dispensing mechanisms 7 and 8 capable of rotation and vertical movement are provided between the reaction disk 1 and the reagent disk 9, and include reagent probes 7a and 8a, respectively. The syringe for reagent 19 is connected to the reagent probes 7a and 8a. Each of the reagent probes 7a and 8a moves along an arc around a rotating shaft, accesses the reagent disk 9 from the aspiration port, and dispenses the reagent from the reagent bottle 10 into the reaction vessel 2.

In an operating range of the reagent dispensing mechanism 7, the cleaning tank 32 where the reagent probe 7a is cleaned with cleaning water is arranged. In an operating range of the reagent dispensing mechanism 8, the cleaning tank 33 where the reagent probe 8a is cleaned with cleaning water is arranged.

In the vicinity of the reaction disk 1, the stirring mechanisms 5 and 6 that stir the mixed liquid (reaction liquid) of the sample and the reagent dispensed into the reaction vessel 2, the spectral photometer 4 that measures the absorbance of the reaction liquid by measuring transmitted light obtained by light transmitting through the reaction liquid in the reaction vessel 2 from the light source 4a, the cleaning mechanism 3 that cleans the used reaction vessel 2, and the like are arranged.

The stirring mechanisms 5 and 6 are configured to be capable of rotation operation and vertical operation with respect to the horizontal direction, and are inserted into the reaction vessel 2 to stir the mixed liquid (reaction liquid) of the sample and the reagent. In an operating range of the stirring mechanisms 5 and 6, the cleaning tanks 30 and 31 where the stirring mechanisms 5 and 6 are cleaned with cleaning water are arranged. The cleaning mechanism 3 is connected to a cleaning pump.

The controller 24 is connected to the above-described devices in the automatic analyzer 100, and controls an operation of each of the devices and mechanisms in the automatic analyzer 100. The controller 24 is a computer including a CPU or a memory, and executes arithmetic processing of acquiring the concentration of a predetermined component in the specimen based on the detection result of the spectral photometer 4.

In the present embodiment, the controller 24 determines whether an optical sensor 52 is abnormal or whether there is contamination in a water supply tank 53, according to an output voltage supplied from a light receiving unit 301 when water of the water supply tank 53 is temporarily reduced. The details of the configuration will be described below.

The control of the operations of the devices by the controller 24 is executed based on various programs stored in a storage device. The storage device stores not only various programs used for the measurement of the specimen but also various parameters input through an input device, information of a specimen to be measured (for example, specimen type information), the measurement result, and the like.

The control processes of the operations executed by the controller 24 may be collectively executed by one program or may be executed individually by a plurality of programs, or a combination thereof may be adopted. Some or all of the programs may be implemented by dedicated hardware or may be modularized.

A display unit 24a is a display device such as a liquid crystal display that displays, to an operator, various information in the automatic analyzer 100, for example, an input screen of various parameters or settings, analysis inspection data for an initial inspection or a re-inspection, a measurement result, or reagent information. The display unit 24a can be a touch panel type that also functions as an input unit.

The water supply unit 102 has a function of supplying water to the analysis unit 101 and includes a water supply equipment 50, a water supplying solenoid valve 51, the optical sensor 52, the water supply tank 53, and a water pump 54.

The water supply equipment 50 is an equipment that supplies water from the outside of the automatic analyzer 100 to the water supply tank 53 in the automatic analyzer 100, and is basically an equipment of a facility such as a hospital or an inspection center where the automatic analyzer 100 is provided.

The water supply tank 53 is a tank that temporarily stores water supplied from the water supply equipment 50 outside of the analyzer and consumed in each of the mechanisms of the automatic analyzer 100, and includes the optical sensor 52 that is provided to prevent water stored in the water supply tank 53 from overflowing or exhausting.

The supply of water to the water supply tank 53 is not always executed, and to supply water to the water supply tank 53 as necessary, the water supplying solenoid valve 51 is provided in a pipe from the water supply equipment 50 to the water supply tank 53. The opening and closing of the water supplying solenoid valve 51 is controlled by an instruction signal from the controller 24 based on water level information from the optical sensor 52.

The water pump 54 supplies water from the water supply tank 53 to each of the mechanisms of the analysis unit 101 through a supply flow path 64. Here, the controller 24 supplies water by opening any one or more of solenoid valves 3a, 18a, 19a, 30a, 31a, 32a, 33a, 40a, and 42a provided in front of a portion where water is consumed.

On the other hand, when water is not consumed in the analysis unit 101, water is circulated from a circulation flow path 65 to the water supply tank 53.

The flow path for supplying water from the water supply equipment 50 to the analysis unit 101 is configured by not only the water supplying solenoid valve 51, the optical sensor 52, the water supply tank 53, and the water pump 54 but also a branch pipe 20, a pressure sensor 21, a relief valve 22, and a waste liquid pipe 23.

For branching, the branch pipe 20 includes a flow path 64 for supplying water to the analysis unit 101, a return flow path 65 for returning water to the water supply tank 53, and a flow path 63 for discharging water to the outside of the analyzer. In the branch pipe 20, a filter 20a for removing contamination that is likely to be mixed in the flow path is provided.

The pressure sensor 21 can detect a pressure change caused by a change in flow path state such as bending of the pipe or a leakage from a solenoid valve, and can detect an abnormality in the pipe and the components of the pipe.

The controller 24 controls ON/OFF of the water pump 54 and the opening and closing of the water supplying solenoid valve 51 and the relief valve 22 based on signals of the optical sensor 52 and the pressure sensor 21.

In the water supply unit 102, when the relief valve 22 is released, water is discharged to the waste liquid pipe 23.

The configuration of the automatic analyzer 100 is as described above.

The configuration of the automatic analyzer 100 is not limited to the biochemical analyzer shown in Fig. 1 that analyzes an analysis item of biochemistry, and can be used as an analysis device that analyzes another analysis item, for example, an immunological analyzer that analyzes an analysis item of immunity. The biochemical analyzer is not limited to the configuration shown in Fig. 1, and an analysis device that measures another analysis item such as an electrolyte can be separately mounted thereon.

The automatic analyzer 100 is not limited to single analysis module configuration shown in Fig. 1, and a configuration in which two or more modules including analysis modules that can measure the same or different analysis items or pre-treatment modules that execute a pre-treatment are connected using a transport device can be adopted.

The analysis process of the automatic analyzer 100 on the inspection sample is generally executed in the following order.

First, the sample in the sample vessel 15 loaded on the sample rack 16 that is transported to the vicinity of the reaction disk 1 by the sample conveying mechanism 17 is dispensed into the reaction vessel 2 on the reaction disk 1 by the sample probes 11a and 12a of the sample dispensing mechanisms 11 and 12. Next, the reagent used for the analysis is dispensed by the reagent dispensing mechanisms 7 and 8 from the reagent bottles 10 on the reagent disk 9 into the reaction vessels 2 into which the sample is previously dispensed. Next, the mixed liquid of the sample and the reagent in the reaction vessel 2 is stirred by the stirring mechanisms 5 and 6.

Next, light emitted from the light source 4a is caused to transmit through the reaction vessel 2 containing the stirred mixed liquid such that the light intensity of the transmitted light is measured by the spectral photometer 4. The light intensity measured by the spectral photometer 4 is transmitted to the controller 24 through an A/D converter and an interface. By executing calculation with the controller 24 to acquire the concentration of a predetermined component in a liquid sample such as blood or urine, the result is displayed by the display unit 24a or the like and is stored in a storage unit (not shown).

Next, portions where water is consumed in the automatic analyzer 100 will be described. Main usages in the analyzer are circulating water for keeping the reaction disk 1 warm, circulating water for keeping the reagent disk 9 cool, and cleaning water of the reagent probes 7a and 8a or the sample probes 11a and 12a.

In the reaction disk 1, to cause the sample and the reagent to react with each other at a constant temperature, water that is kept at a constant temperature (for example, 37 degrees) is circulated by a circulation pump 40. The reaction vessel 2 is kept at the constant temperature using the water, and the sample and the reagent are caused to react with each other under a constant condition.

As described above, the reaction vessel 2 is kept at the temperature using the water. Therefore, the light emitted from the light source 4a transmits through not only the reaction vessel 2 but also water flowing through the reaction tank. Here, when air bubbles are present on a straight line connecting the light source 4a and the spectral photometer 4, the light emitted from the light source 4a is diffused by the air bubbles, and there is a possibility that the analysis result is not normally determined. Therefore, in general, a deaerator (not shown) is provided in a flow path that circulates the reaction tank to prevent the formation of air bubbles in the reaction tank, and the cleaning of the tank prevents contamination from being supplied to the flow path of the analyzer.

In the reagent disk 9, to prevent deterioration of the reagent, water that is cooled by a cooling device is circulated by a circulation pump 42 such that the inside of the reagent disk 9 is kept at a low temperature.

The reagent probes 7a and 8a used for aspirating and dispensing the reagent or the sample probes 11a and 12a used for aspirating and dispensing the sample are not disposable, and the same probes are continuously used.

Here, when the reagent or the sample discharged in the previous dispensing operation remains in the probe, contamination where the previous reagent or sample is mixed with the reagent or the sample to be aspirated in the next operation occurs, and there is a possibility that the analysis result is not normally determined. Therefore, when the same probes are used, in general, the outer surfaces of the reagent probes 7a and 8a are cleaned in the cleaning tanks 32 and 33 and the outer surfaces of the sample probes 11a and 12a are cleaned in the cleaning tanks 13 and 14 by discharging cleaning water to the probe outer surfaces. The probe inner surfaces are cleaned by discharging cleaning water from the probes using a pump at a high pressure in the cleaning tanks 13, 14, 31, and 32. To discharge the cleaning water at a high pressure, a gear pump 41 is used in many cases.

As described above, water is used in various mechanisms of the analysis unit 101. Therefore, when foreign matter such as bubbles or contamination is mixed in the supplied water, the foreign matter causes a decrease in analysis performance or analyzer fault.

Accordingly, even when bubbles are mixed in the supplied water, the water supply tank 53 having a sufficient size for the water flow in the water supply tank 53 to become stable is provided to prevent the bubbles from being supplied to the water pump 54. On the other hand, since the water flow in the water supply tank 53 is stable, water remains in the water supply tank 53 for a long period of time, and there is concern that bacteria may breed and contamination may be accumulated in the inner surface of the water supply tank 53. When the contaminated water is supplied to the analysis unit 101 through the water pump 54, there is a concern that the contaminated water may affect the analysis performance.

As a countermeasure, the cleaning of the water supply tank 53 by a customer is regularly executed, which is a burden on the customer.

Here, as a water level sensor that is a water level monitoring method of the water supply tank 53, for example, a float sensor or a capacitive sensor that monitors the water level from the inside of the water supply tank 53 or an optical sensor or an ultrasonic sensor that monitors the water level from the outside of the water supply tank 53 is used. However, an increase of objects in contact with water leads to an increase in the area of contamination accumulated portions and an increase in the area of portions to be cleaned. Therefore, it is desirable to monitor the water level from the outside of the water supply tank 53.

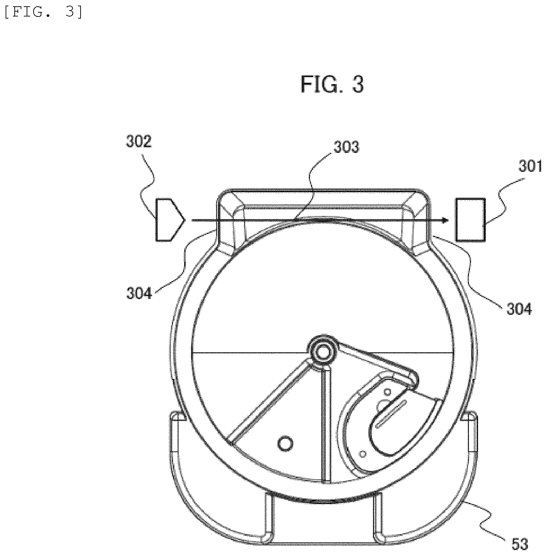

The details of the optical sensor 52 for the configuration will be described using Fig. 3 and the following drawings. Fig. 3 is a top view of the water supply tank 53 in the present embodiment.

The optical sensor 52 includes a light source 302 and a light receiving unit 301 that receives light irradiated from the light source 302, and is arranged such that an optical axis 303 connecting the light source 302 and the light receiving unit 301 blocks a part of the water supply tank 53. The optical sensor 52 receives the light irradiated from the light source 302 using the light receiving unit 301, and outputs a voltage detection value corresponding to a light receiving amount to the controller 24. The controller 24 detects the water level based on the voltage measured value output from the light receiving unit 301 of the optical sensor 52 as described above.

Specifically, when the water level is lower than the optical axis 303, only the water supply tank 53 is present on the optical axis 303. Here, the water supply tank 53 is formed of a material through which light having a wavelength of the light source 302 transmits, and includes a flat unit 304 on the water supply tank surface on the optical axis 303. As a result, the light emitted from the light source 302 is received by the light receiving unit 301. Thus, the light receiving unit 301 outputs the voltage.

On the other hand, when the water level is higher than the optical axis 303, not only the water supply tank 53 but also water are present on the optical axis 303. Since the water absorbs the light having the wavelength of the light source 302, the light of the light source cannot be received by the light receiving unit 301. Thus, the output voltage of the light receiving unit 301 is substantially zero.

By comparing the output voltage of the light receiving unit 301 and a predetermined threshold to obtain a magnitude relationship, whether the water level is higher or lower the optical axis 303 can be determined.

The shape of the water supply tank 53 is not limited to a shape of including the flat unit 304 shown in Fig. 3, and water supply tanks having various shapes or materials that have materials or structures through which the light from the light source 302 transmits can be used.

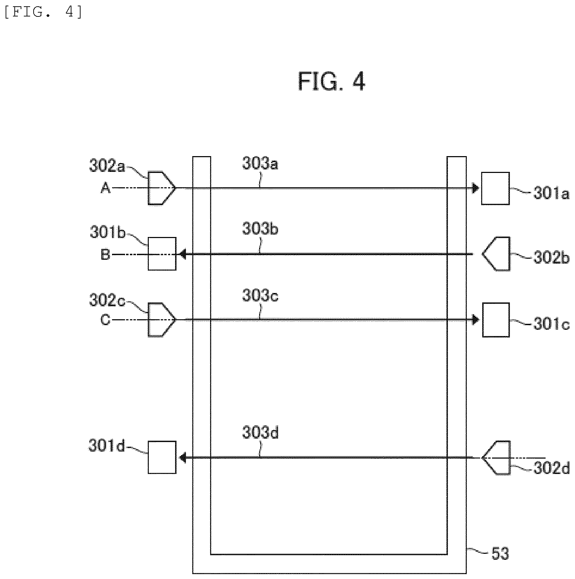

Fig. 4 is a diagram showing the water supply tank 53 according to the present embodiment when seen from the horizontal direction.

As shown in Fig. 4, in the present embodiment, four optical sensors 52 are arranged in the vertical direction. However, the number of sensors can be freely changed depending on the number of water levels to be monitored, and can be at least one.

As shown in Fig. 4, four optical sensors 52 monitor water levels A, B, C, and D, respectively. On the water level A, the optical sensor 52 configured of a light receiving unit 301a and a light source 302a is provided, and an optical axis 303a is present.

Likewise, the optical sensor 52 configured of a light receiving unit 301b and a light source 302b is provided on the water level B, the optical sensor 52 configured of a light receiving unit 301c and a light source 302c is provided on the water level C, the optical sensor 52 configured of a light receiving unit 301d and a light source 302d is provided on the water level D, and optical axes 303b, 303c, and 303d are present on the water levels B, C, and D, respectively.

In the present embodiment, in the optical sensors 52 having a close installation distance and adjacent to each other among the plurality of optical sensors 52, the light source 302 and the light receiving unit 301 are alternately arranged.

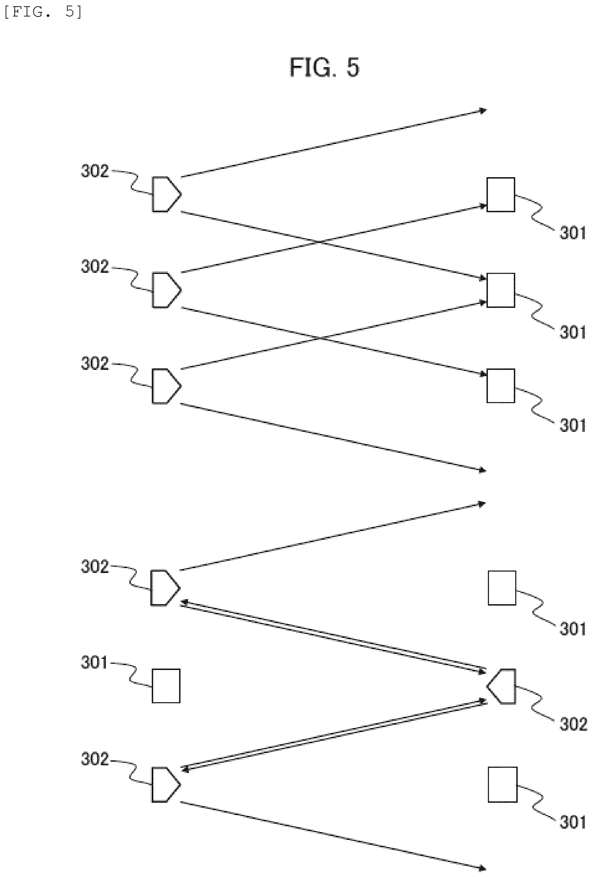

The reason is that light emitted from the light sources 302a, 302b, and 302c travels while spreading as shown in Fig. 5. Since the light emitted from the light sources 302a, 302b, and 302c spreads, when the installation distance between the optical sensors 52 is close and the light sources 302 and the light receiving units 301 are arranged in the same direction, respectively (refer to the upper side of Fig. 5), there is a concern that light irradiated from one light source 302 may be received by the light receiving unit 301 of the adjacent sensors. Therefore, as shown on the lower side of Fig. 5, it is desirable to alternately arrange the light source 302 and the light receiving unit 301 such that unnecessary detection of light from the light source 302 of the adjacent sensors can be avoided.

When the distance between the adjacent optical sensors 52 is sufficiently large to be more than or equal to the spread of the light from the light source 302, it is not necessary to alternately arrange the light source 302 and the light receiving unit 301, and the light sources 302 and the light receiving units 301 can be arranged in the same direction, respectively.

Here, the optical sensor 52 is disadvantageous in that, when the light intensity of the light source 302 decreases due to deterioration of the light source 302 or the like or when contamination is attached to the optical axis 303 of the inner surface of the water supply tank 53, the light receiving amount of the light receiving unit 301 decreases and the water level is likely to be erroneously determined.

On the other hand, in the controller 24, by using values of an input voltage to the light source 302 and an output voltage from the light receiving unit 301 at that time, whether the optical sensor 52 is abnormal or whether there is contamination in the water supply tank 53 can be determined, and sensor replacement and cleaning of the water supply tank 53 can be urged at the best timing. As a result, an automatic analyzer having higher analysis performance and reliability can be provided. The frequency of maintenance that needs to be regularly executed can be reduced.

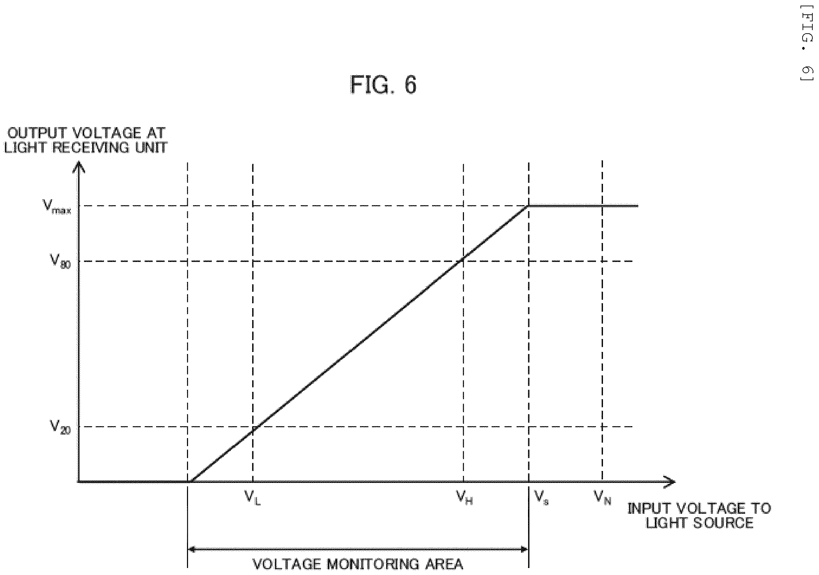

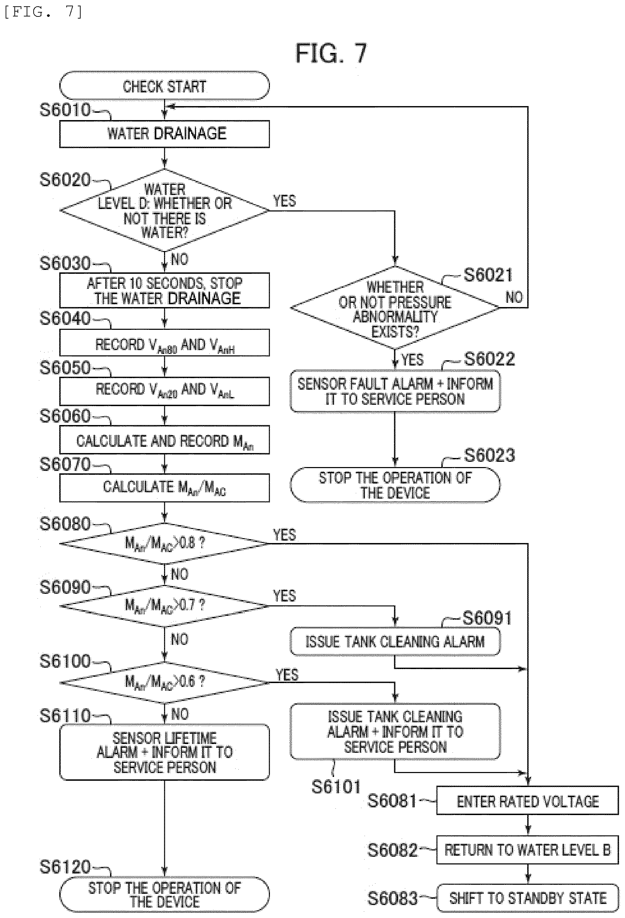

Hereinafter, the flow of a process of detecting a decrease in the light intensity of the light source 302 and contamination on the optical axis 303 will be described using Figs. 6 and 7. Fig. 6 shows a change in the output voltage from the light receiving unit 301 when the input voltage to the light source 302 varies, and Fig. 7 shows a flowchart of checking whether the light intensity of the light source 302 decreases and whether there is contamination on the optical axis 303 in the present embodiment.

First, a preferable control of the controller 24 during the check will be described.

As shown in Fig. 6, when the voltage input to the light source 302 is lower than predetermined voltage V_{S}, light having a light intensity proportional to the input voltage is emitted, the detection value of the light receiving unit 301 increases, and the output voltage value also increases in proportion to the detection value. When a voltage that is higher than or equal to the predetermined voltage V_{S} is input, the light source 302 emits light having a certain light intensity. Therefore, the detection value of the light receiving unit 301 and the output voltage value proportional to the detection value are saturated at a constant value Vₘₐₓ.

The reason is that, when the optical sensor 52 is used for detecting the water level, when rated voltage V_{N} is input to the light source 302 and the water level is lower than the optical axis 303, the output from the light receiving unit 301 is generally designed to overshoot a maximum value in a displayable range of the light receiving unit 301, and it is assumed that such design is also adopted in the optical sensor 52 according to the present embodiment.

Accordingly, it is assumed that, during the typical water level detection, the controller 24 applies a voltage that is higher than or equal to the predetermined voltage V_{S}, for example, the predetermined voltage V_{N} as the input voltage to the light source 302.

On the other hand, the applied voltage to the light source 302 during the check process of detecting whether the light intensity of the light source 302 decreases and whether there is contamination on the optical axis 303 is desirably a value that is lower than the applied voltage V_{N} during the typical water level check, for example, voltage V_{L} in a region where light having a light intensity proportional to the input voltage is emitted or voltage V_{H} that is higher than the voltage V_{L}. As a result, even when the light intensity of the light source 302 decreases or when contamination is attached to the optical axis 303, the occurrence of a malfunction that the output value is still the maximum value and cannot be detected can be reliably avoided.

The applied voltage during the check may be the low voltage value V_{L} or may be the high voltage value V_{H}, but it is desirable to check whether the output voltage of the light receiving unit 301 at the applied voltage V_{N} during the water level check is the constant value Vₘₐₓ before the start of the check or after the completion of the check.

Next, the flow of the check will be described using Fig. 7.

The check can start when the analyzer starts up or when 24 hours or longer elapses from the previous check in a stand-by state between analysis operations. When the operation is in progress at the timing when 24 hours or longer elapses from the previous check, the check is executed at the time of the next stand-by. However, the check interval can be changed depending on the specification or the usage environment of the analyzer. The check may be executed based on an instruction of a service person or an operator instead of being automatically executed.

Here, when the number of times whether the light intensities of the light sources 302a, 302b, 302c, and 302d decrease or whether there is contamination on the optical axis 303 is checked is represented by n, the values of the output voltages of the light receiving units 301a, 301b, 301c, and 301d of the water levels A, B, C, and D are represented by V_{An}, V_{Bn}, V_{Cn}, and V_{Dn}, respectively.

During sensor calibration (performance check) that is executed at the time of sensor attachment and replacement, the outputs acquired using the above-described method are represented by V_{AC}, V_{BC}, V_{CC}, and V_{DC}, respectively.

The determinations of the four optical sensors 52 are executed at the same time. However, the determinations of the optical sensors 52 can be executed individually at different timings. When the determinations are executed at the same time, the check time can be reduced. When the determinations are executed one by one, the influence of ambient light can be reduced by turning off light sources other than the light source corresponding to the light receiving unit to be checked.

During the check, first, the control of water supply is stopped to cut out the water supply to the water supply tank 53. Specifically, when determining whether the optical sensor 52 is abnormal or whether there is contamination within the water supply tank 53, the controller 24 keeps the water supplying solenoid valve 51 provided between the water supply tank 53 and the water supply equipment 50 closed to cut out the water supply to the water supply tank 53.

When determining whether the optical sensor 52 is abnormal or whether there is contamination within the water supply tank 53, the controller 24 may keep the water supplying solenoid valve 51 provided between the water supply tank 53 and the water supply equipment 50 open to continue the water supply to the water supply tank 53, and may appropriately select the valve state. Here, the relief valve 22 also needs to be opened.

Next, to lower the water level in the water supply tank 53, the controller 24 drains water by releasing the relief valve 22 and operating the water pump 54 (Step S6010) . In the present embodiment, water is drained at a rate of 2 L/min. Of course, however, the drainage rate is not limited thereto.

Next, the controller 24 causes the optical sensor 52 to determine whether water is present to detect the water level D arranged at the lowest position (Step S6020) .

When no water is determined in Step S6020, the process proceeds to Step S6030. On the other hand, when the presence of water is determined, the controller 24 determines whether the pressure is abnormal by causing the pressure sensor 21 to monitor the pressure of the flow path from the water supply tank 53 at the same time (Step S6021). The reason is to detect a case where the amount of water decreases more than necessary due to the abnormality of the optical sensor 52 and many bubbles flow into the flow path.

When the controller 24 determines that the pressure abnormality is detected in Step S6021, the controller 24 outputs a sensor fault alarm to the display unit 24a, automatically contacts the service person (Step S6022), and stops the operation of the analyzer (Step S6023) .

On the other hand, when the controller 24 determines that the pressure abnormality is not detected in Step S6021, the controller 24 returns the process to Step S6010 and waits for a decrease in water level.

When it is determined as no water in Step S6020 and the liquid level is immediately below the optical axis 303, to reliably avoid light irradiated from the light source 302d from being reflected from the liquid level to be incident into the light receiving unit 301d, the controller 24 stops the water pump 54 after 10 seconds, closes the relief valve 22, and stops drainage (Step S6030). The number of seconds is a value calculated based on the drainage rate, the volume of the water supply tank 53, and the spread of the light of the light source 302d, and can be appropriately changed.

Next, the controller 24 measures the output voltage of each of the light receiving units 301a, 301b, 301c, and 301d. Hereinafter, a case of the water level A will be described as an example, but the same can also be applied to the water levels B, C, and D.

During the voltage measurement, first, the input voltage to the light source 302a decreases.

First, the controller 24 decreases the input voltage to the light source 302a such that the output voltage value from the light receiving unit 301d is V_{An80} that is 80% of V_{ACmax}, and records V_{An80} and input voltage V_{AnH} to the light source 302a at that time in the storage unit (Step S6040) .

Next, the controller 24 decreases the input voltage to the light source 302a such that the output voltage value from the light receiving unit 301d is V_{An20} that is 20% of V_{ACmax}, and records V_{An20} and input voltage V_{AnL} to the light source 302a at that time in the storage unit (Step S6050) .

Next, the controller 24 reads the output voltages in Steps S6040 and S6050 and during the sensor calibration from the storage unit, calculates a ratio M_{An} (= (V_{An80} - V_{An20}) / (V_{AnH} - V_{ARL})) of a difference between the plurality of output voltages from the light receiving unit 301a to a difference between the plurality of input voltages to the light source 302a, and stores the ratio M_{An} in the storage unit (Step S6060) .

Next, the controller 24 calculates a ratio M_{An}/M_{AC} of the ratio M_{An} between the differences obtained in Step S6060 to a ratio M_{AC} between the differences acquired as described above during the sensor calibration (Step S6070) .

In the present embodiment, whether the light intensity of the light source 302a decreases or whether there is contamination on the optical axis 303a is determined based on the value of the ratio M_{An}/M_{AC}, and the behavior of the analyzer is determined.

First, the controller 24 determines whether M_{An}/M_{AC} is more than 0.8 (Step S6080). When the controller 24 determines that M_{An}/M_{AC} is more than 0.8, the controller 24 determines that the light intensity of the light source 302a does not decrease and there is no contamination on the optical axis 303a, and proceeds the process to Step S6081.

On the other hand, when the controller 24 determines that M_{An}/M_{AC} is 0.8 or less, the controller 24 proceeds the process to Step S6090, and determines whether M_{AR}/M_{AC} is more than 0.7 (Step S6090).

When the controller 24 determines that M_{An}/M_{AC} is more than 0.7, the controller 24 determines that the light intensity of the light source 302a is likely to decrease or there is likely to be contamination on the optical axis 303a, proceeds the process to Step S6091, causes the display unit 24a to display an alarm urging the cleaning of the water supply tank 53 while maintaining the operation of the analyzer (Step S6091), and proceeds the process to Step S6081.

On the other hand, when the controller 24 determines that M_{An}/M_{AC} is 0.7 or less, the controller 24 proceeds the process to Step S6100, and determines whether M_{AR}/M_{AC} is more than 0.6 (Step S6100).

When the controller 24 determines that M_{An}/M_{AC} is more than 0.6, the controller 24 determines that the light intensity of the light source 302a is likely to decrease or there is likely to be contamination on the optical axis 303a, proceeds the process to Step S6091, causes the display unit 24a to display an alarm urging the cleaning of the water supply tank 53 and automatically gives the notification to the service person while maintaining the operation of the analyzer (Step S6101), and proceeds the process to Step S6081.

On the other hand, when the controller 24 determines that M_{An}/M_{AC} is 0.6 or less, the controller 24 determines that the lifetime of the light source 302a ends, proceeds the process to Step S6110, causes the display unit 24a to display an alarm representing that the lifetime of the sensor ends, and automatically gives a notification to the service person (Step S6110). The controller 24 stops the operation of the analyzer (Step S6120).

As such, the controller 24 determines whether the optical sensor 52 is abnormal or whether there is contamination in the water supply tank 53, by using the ratio of the difference between the plurality of output voltages from the light receiving unit 301 to the difference between the plurality of input voltages to the light source 302.

When determining whether the optical sensor 52 is abnormal or whether there is contamination in the water supply tank 53, the controller 24 can output a water supply tank 53 cleaning alarm in case that the output voltage is smaller than a first threshold, can output the water supply tank 53 cleaning alarm and a contact signal to the service person in case that the output voltage is smaller than a second threshold, and can output a sensor fault alarm and stop the operation of the automatic analyzer 100 in case that the output voltage is smaller than a third threshold.

In the present embodiment, the thresholds of M_{An}/M_{AC} for determining the behavior of the analyzer are, for example, 0.8 (first threshold), 0.7 (second threshold), and 0.6 (third threshold). However, the thresholds can be appropriately changed depending on the specifications of the analyzer and the sensor. The lifetime of the sensor can also be estimated from a relationship between the acquired data and the elapsed time, and when data that largely deviates from estimation is acquired, the cause such as sudden occurrence of contamination or mixing of foreign matter can be identified, and the alarm content can also be optimized.

The number of the thresholds is not limited to three, and may be three or more or three or less. Therefore, the number of the thresholds can be determined depending on the desired number of behaviors of the analyzer.

Returning to Fig. 7, when the determination of Step S6080 is YES or when Step S6091 and Step S6101 are executed, the controller 24 determines that there is no problem in continuing the operation of the analyzer, and changes the input voltage to the light source 302a to the rated value V_{N} (Step S6081).

Next, the controller 24 releases the water supplying solenoid valve 51 and continuously supplies water until the water level reaches the water level B (Step S6082).

Finally, the controller 24 shifts to the analyzer stand-by state (Step S6083) and ends the determination.

Here, when the controller 24 drains water for a certain period of time after the optical sensor 52 detects no water as a detection value, specifically, as a method of reducing the water level in the water supply tank 53 in Step S6030, the controller 24 stops the water drainage 10 seconds after the water level is lower than the water level D. However, for example, when a flowmeter is provided, the controller 24 can temporarily reduce the water of the water supply tank 53 by draining a certain amount of the water after the optical sensor 52 detects no water as a detection value.

When a sensor for detecting that the water supply tank 53 is empty is provided, water may be drained until the water supply tank 53 is empty.

When a plurality of sensors are provided as in the present embodiment, the water supply and the discharge speed can be grasped from a time difference between the time when the determination of whether water is present on the water level A is switched and the time when the determination of whether water is present on the water level B is switched. Therefore, based on the grasped data, the supply and discharge of water can also be stopped to obtain any water level that is not monitored by the optical sensor 52.

A method of increasing the water level is not also particularly limited as in the method of temporarily reducing water in the water supply tank 53. After finishing determining whether the optical sensor 52 is abnormal or whether there is contamination in the water supply tank 53, the controller 24 can supply water for a certain period of time, can supply a certain amount of water, or can supply water until the water level reaches a predetermined water level.

As the index for determining the behavior of the analyzer, the value of the ratio M_{An}/M_{AC} between the differences is used. However, the present invention is not limited thereto, and the value of M_{AR}/M_{AR-1}, V_{An80}/V_{AnH}, V_{A80}/V_{AnH}, or the like can also be used.

The configuration where the input voltage to the light source 302 is temporarily reduced during the voltage measurement was described as an example. When the output voltage of the light receiving unit 301 at the time of rating is lower than the maximum value of the displayable range, that is, when the output voltage changes due to a decrease in light intensity or the occurrence of contamination at the time of rating, the evaluation can also be executed based on the output voltage at the time of rating.

As the abnormality detection method during water discharge, the pressure of the flow path is monitored using the pressure sensor 21. For example, an abnormality can also be detected using a flow sensor. Here, the flow sensor is arranged in a flow path from the water supply tank 53 to the waste liquid pipe 23. When many bubbles flow to the flow path by excessively reducing the water level, an excessive reduction in water level can be detected from a change in flow rate measured by the flow sensor.

Next, the effect of the embodiment will be described.

The automatic analyzer 100 according to the embodiment includes: a water supply tank 53 that temporarily stores water supplied outside of the analyzer and consumed in each mechanism of the automatic analyzer 100; an optical sensor 52 including a light source 302 and a light receiving unit 301 for receiving light irradiated from the light source 302, for detecting amount of the water within the water supply tank 53; and a controller 24 that controls operation of each mechanism within the automatic analyzer 100, in which the water supply tank 53 is arranged between the light source 302 and the light receiving unit 301, and the controller 24 determines whether the optical sensor 52 is abnormal or whether there is contamination within the water supply tank 53, according to an output voltage supplied from the light receiving unit 301 when the water of the water supply tank 53 is temporarily reduced.

With such configuration, whether the light intensity of the light source 302 decreases, whether there is contamination on the optical axis 303, that is, whether there is contamination in the water supply tank 53, or whether water is contaminated can be detected, and the replacement of the optical sensor 52 or the cleaning of the water supply tank 53 can be urged at the best timing. Accordingly, an analyzer capable of reducing the maintenance frequency of an operator and having high reliability and analysis performance can be provided.

The controller 24 can drain the water for a certain period of time after the optical sensor 52 detects no water as a detection value or can drain a certain amount of the water after the optical sensor 52 detects no water as a detection value, to temporarily reduce the water of the water supply tank 53. Therefore, the possibility of a state where the liquid level is immediately below the optical axis 303 can be further reduced, light irradiated from the light source 302d can be reliably avoided from being reflected from the liquid level to be incident into the light receiving unit 301d, and the possibility of erroneous detection can be further reduced.

The controller 24 determines whether the optical sensor 52 is abnormal or whether there is contamination within the water supply tank 53, by using the values of an input voltage to the light source 302 and an output voltage at the light receiving unit 301 at that time. In particular, the controller 24 determines whether the optical sensor 52 is abnormal or whether there is contamination within the water supply tank 53, by using a ratio of a difference between a plurality of output voltages from the light receiving unit 301 to a difference between a plurality of input voltages to the light source 302. As a result, high-accuracy determination can be implemented.

The automatic analyzer 100 includes a plurality of the optical sensors 52. As a result, the accuracy of detecting the water level or the accuracy of checking whether there is contamination in the water supply tank 53 can be further improved.

The controller 24 determines the plural optical sensors 52 at the same time. As a result, the efficiency of determining whether the optical sensor 52 is abnormal or whether there is contamination in the tank can be improved.

The controller 24 determines the plural optical sensors 52 individually at different timings. As a result, the influence of light from another optical sensor 52 can be reliably avoided, and the detection accuracy can be further improved.

Among the plurality of optical sensors 52, in adjacent optical sensors 52, the light source 302 and the light receiving unit 301 are alternately arranged. As a result, the influence of light from another optical sensor 52 can be reduced, and the detection accuracy can be further improved.

When determining whether the optical sensor 52 is abnormal or whether there is contamination within the water supply tank 53, the controller 24 outputs a water supply tank 53 cleaning alarm in case that the output voltage is smaller than a first threshold, outputs the water supply tank 53 cleaning alarm and a contact signal to a service person in case that the output voltage is smaller than a second threshold, and outputs a sensor fault alarm and stops the operation of the automatic analyzer 100 in case that the output voltage is smaller than a third threshold. As a result, it is possible to deal with various situations in the water supply tank 53, excessive maintenance can be avoided, and a further reduction in burden can be implemented.

After finishing determining whether the optical sensor 52 is abnormal or whether there is contamination within the water supply tank 53, the controller 24 supplies water for a certain period of time, supplies a certain amount of water, or supplies water until a water level reaches a predetermined water level. As a result, water can be reliably supplied.

When determining whether the optical sensor 52 is abnormal or whether there is contamination within the water supply tank 53, the controller 24 keeps the water supplying solenoid valve 51 provided between the water supply tank 53 and the water supply equipment 50 closed to cut out the water supply to the water supply tank 53. As a result, the consumption of water can be reduced.

When determining whether the optical sensor 52 is abnormal or whether there is contamination within the water supply tank 53, the controller 24 keeps the water supplying solenoid valve 51 provided between the water supply tank 53 and the water supply equipment 50 open to continue the water supply to the water supply tank 53. As a result, water remaining in the water supply tank 53 can be replaced with new water, and deterioration of water in the water supply tank 53 can be prevented.

### <Others>

The present invention is not limited to the above-described embodiment, and various modifications and applications can be made. The embodiment has been described in detail to easily describe the present invention, and the present invention is not necessarily to include all the configurations described above.

### Reference Signs List

1: reaction disk
2: reaction vessel
3: cleaning mechanism
3a, 18a, 19a, 30a, 31a, 32a, 33a, 40a, 42a: solenoid valve
4: spectral photometer
4a: light source
5, 6: stirring mechanism
7, 8: reagent dispensing mechanism
7a, 8a: reagent probe (dispensing probe)
9: reagent disk
10: reagent bottle
11, 12: sample dispensing mechanism
11a, 12a: sample probe (dispensing probe)
13, 14: cleaning tank
15: sample vessel
16: sample rack
17: sample conveying mechanism
18: syringe for sample
19: syringe for reagent
20: branch pipe
20a: filter
21: pressure sensor
22: relief valve
23: waste liquid pipe
24: controller
24a: display unit
30,31, 32, 33: cleaning tank
40: circulation pump
41: gear pump
42: circulation pump
50: water supply equipment
51: water supplying solenoid valve
52: optical sensor
53: water supply tank
54: water pump
63: flow path
64: supply flow path
65: circulation flow path
100: automatic analyzer
101: analyzing unit
102: water supply unit
301, 301a, 301b, 301c, 301d: light receiving unit
302, 302a, 302b, 302c, 302d: light source
303, 303a, 303b, 303c, 303d: optical axis
304: flat unit

## Claims

1. An automatic analyzer comprising:
a water supply tank that temporarily stores water supplied outside of the analyzer and consumed in each mechanism of the same analyzer;
an optical sensor including a light source and a light receiving unit for receiving light irradiated from the light source, for detecting amount of the water within the water supply tank; and
a control unit that controls operation of each mechanism within the automatic analyzer, wherein
the water supply tank is arranged between the light source and the light receiving unit, and
the control unit determines whether the optical sensor is abnormal or whether there is contamination within the water supply tank, according to an output voltage supplied from the light receiving unit when the water of the water supply tank is temporarily reduced.

2. The analyzer according to claim 1, wherein
the control unit drains the water for a certain period of time after the optical sensor detects no water as a detection value, to temporarily reduce the water of the water supply tank.

3. The analyzer according to claim 1, wherein
the control unit drains a certain amount of the water after the optical sensor detects no water as a detection value, to temporarily reduce the water of the water supply tank.

4. The analyzer according to claim 1, wherein
the control unit determines whether the optical sensor is abnormal or whether there is contamination within the water supply tank, by using the values of an input voltage to the light source and an output voltage at the light receiving unit at that time.

5. The analyzer according to claim 4, wherein
the control unit determines whether the optical sensor is abnormal or whether there is contamination within the water supply tank, by using a ratio of a difference between a plurality of output voltages from the light receiving unit to a difference between a plurality of input voltages to the light source.

6. The analyzer according to claim 1, comprising
a plurality of the optical sensors.

7. The analyzer according to claim 6, wherein
the control unit determines the plural optical sensors at the same time.

8. The analyzer according to claim 6, wherein
the control unit determines the plural optical sensors individually at different timings.

9. The analyzer according to claim 6, wherein
in the adjacent optical sensors, of the plural optical sensors, the light source and the light receiving unit are alternately arranged.

10. The analyzer according to claim 1, wherein
when determining whether the optical sensor is abnormal or whether there is contamination within the water supply tank, the control unit outputs a tank cleaning alarm in case that the output voltage is smaller than a first threshold, outputs the tank cleaning alarm and a contact signal to a service person in case that the output voltage is smaller than a second threshold, and outputs a sensor fault alarm and stops the operation of the analyzer in case that the output voltage is smaller than a third threshold.

11. The analyzer according to claim 1, wherein
after finishing determining whether the optical sensor is abnormal or whether there is contamination within the water supply tank, the control unit supplies water for a certain period of time, supplies a certain amount of water, or supplies water until a water level reaches a predetermined water level.

12. The analyzer according to claim 1, wherein
when determining whether the optical sensor is abnormal or whether there is contamination within the water supply tank, the control unit keeps closing a water supplying solenoid valve provided between the water supply tank and a water supply equipment to cut out the water supply to the water supply tank.

13. The analyzer according to claim 1, wherein
when determining whether the optical sensor is abnormal or whether there is contamination within the water supply tank, the control unit keeps opening the water supplying solenoid valve provided between the water supply tank and a water supply equipment to continue the water supply to the water supply tank.
